# EUROPEAN PATENT SPECIFICATION

(11) **EP 1 884 001 B1**
(45) Date of publication and mention of the grant of the patent: **04.12.2013**
(21) Application number: 06745329.0
(22) Date of filing: 08.05.2006
(51) Int. Cl.: H02B 1/30

(54) **CABINET FOR ELECTRICAL SWITCHBOARD**
SCHRANK FÜR EIN ELEKTRISCHES SCHALTFELD
ARMOIRE POUR TABLEAU ELECTRIQUE

(30) Priority: 17.05.2005 IT MI20050898
(43) Date of publication of application: 06.02.2008
(73) Proprietor: Bticino S.p.A., 21100 Varese (IT)
(72) Inventor: LODI, Fabrizio, I-21100 Varese (IT); PIZZADINI, Alessio, I-21029 Vergiate (IT)
(74) Representative: Long, Giorgio
(86) International application number: PCT/IT2006/000322
(87) International publication number: WO 2006/123383

(56) References cited:
- WO-A-02/073761
- US-A- 5 944 439

## Description

The present invention relates to cabinets for electrical switchboards.

Document WO 02/073761 discloses a device according to the preamble of claim 1.

Typically, an electrical switchboard comprises a cabinet or box in which there are arranged support frameworks (for example, support frames) with electrical devices being mounted thereon, such as switches. In greater detail, a conventional cabinet for electrical switchboard comprises a rear wall or panel, side walls or flanks and a front wall or panel. The electrical devices are connected, either directly or by means of suitable support structures, to the rear panel of the cabinet, which normally has a quadrangular shape. The front panel is an access door to the electrical switchboard for a user or a maintenance operator.

An important feature of an electrical switchboard is that all the metallic parts, usually the rear panel and the flanks, have to be equipotential and connected to the earth terminal, or according to the terminology of the field, "grounded or earthed".

In order to meet this requirement, cabinets of the so-called monobloc type made of metallic material are currently manufactured and installed. With these cabinets, the rear panel and the flanks are made as one piece and are earthed, such as with a respective electrical lead. This monobloc structure has a drawback in that it is not very versatile.

Furthermore, modular cabinets are known in which the rear panel and the flanks made of metallic material are joined to each other by means of angular uprights made of plastic materials. In this case, the grounding is not convenient for the installer, since one or more leads are required to be used in order to contact the two flanks, which are separated by a respective plastic upright, and the rear panel.

The object of the present invention is to provide a cabinet for electrical switchboard alternative to prior art cabinets, which particularly facilitates the grounding operation.

This object is achieved by the cabinet for electrical switchboard as defined and characterized in claim 1.

The invention will be better understood from the following detailed description of an embodiment thereof, which is given by way of example with reference to the annexed figures, in which:
Fig. 1-3 sequentially illustrate partial perspective views of assembly steps of a cabinet for electrical switchboard according to an example of the invention, and

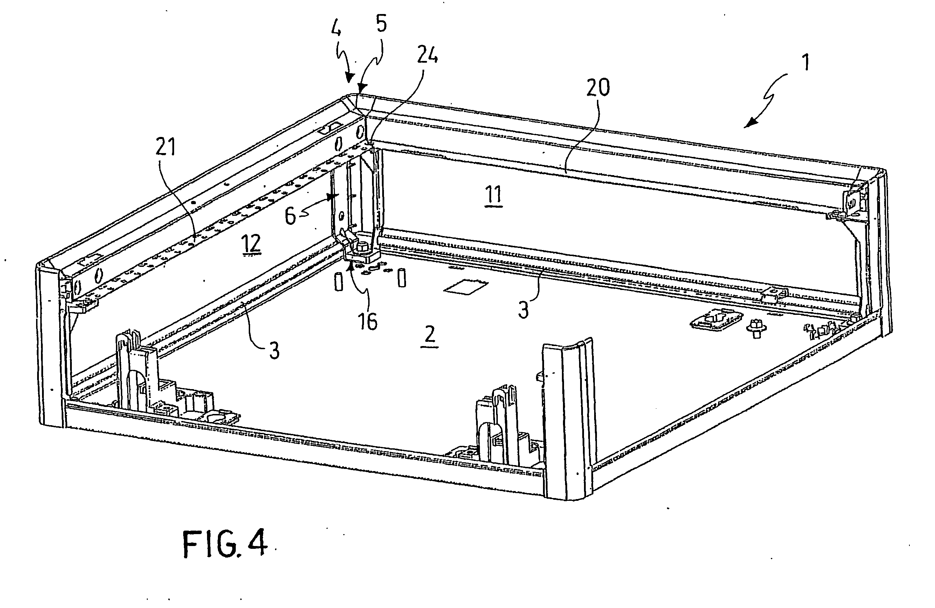

Fig. 4 shows an overall view of said cabinet with four uprights and two side walls being assembled to the rear wall.

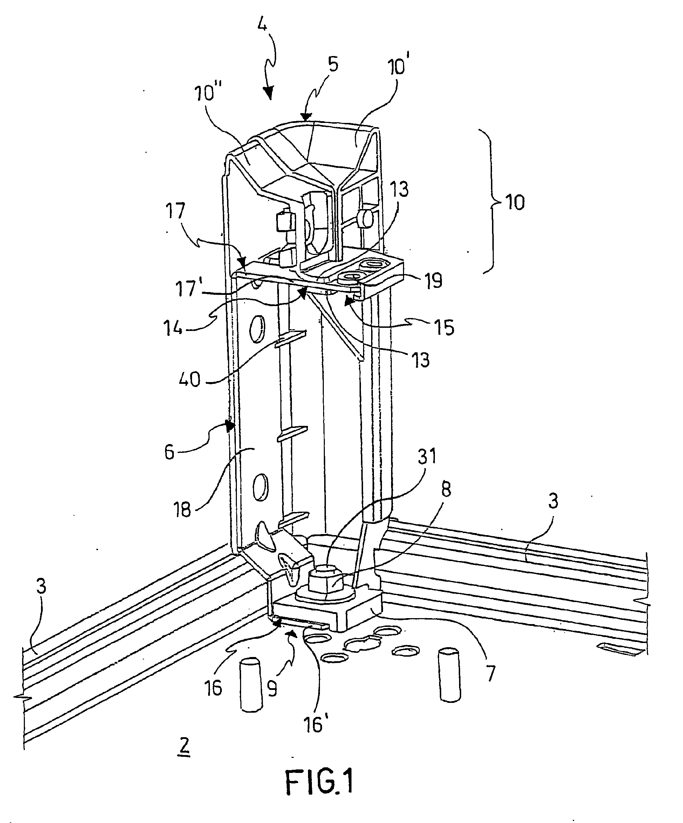

With reference to Fig. 1, a cabinet for electrical switchboard being globally designated with numeral 1, comprises, in a first construction step, a rear wall or panel 2 having a quadrangular shape, rectangular in the example, having a frame in relief 3, and four uprights 4 on each vertex of the panel.

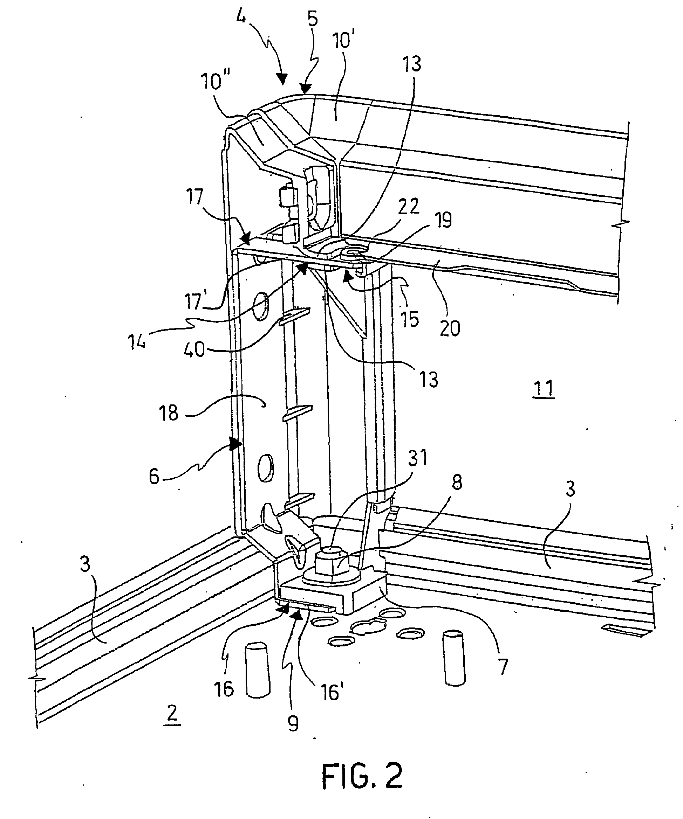

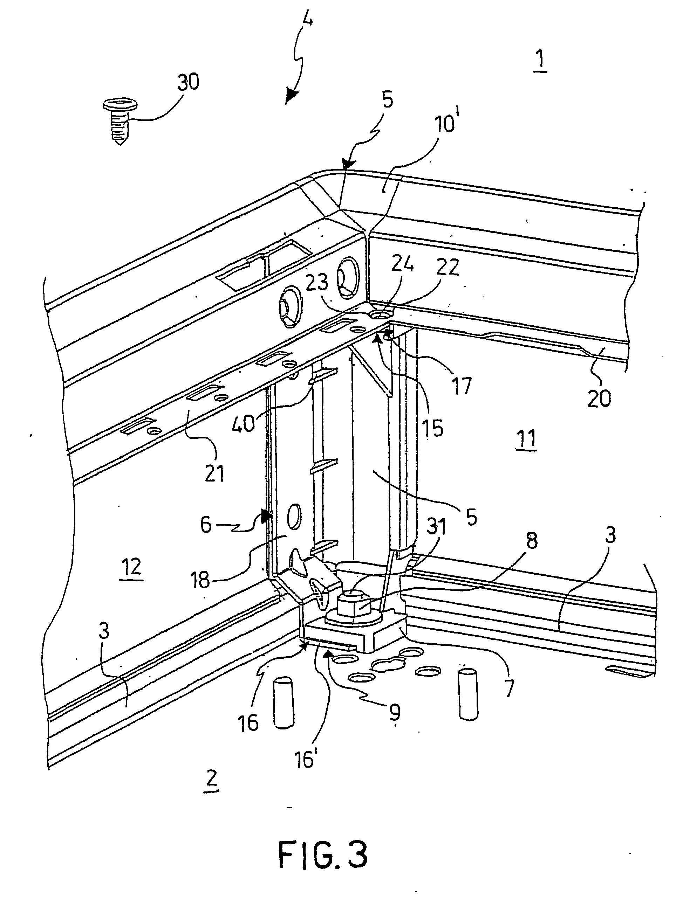

An upright 4 is comprised of an outer angular element 5 and an inner element 6. The angular element 5 is made of an electrically insulating material, such as plastic, and externally has a substantially rounded connecting surface. The angular element 5 has a plurality of coupling means therein, which are suitable to cooperate, generally, with cabinet walls and the inner element 6. In greater detail, by cabinet walls is meant both the rear wall 2, as mentioned above, and suitable to house electrical devices and/or switches, and side walls or flanks 11 and 12, such as schematically represented in Fig. 2 and 3. The rear wall 2 and the side walls 11 and 12 are made of electrically conductive material, such as metal.

The angular element 5 has a foot 7 suitable to abut against the rear wall 2 and may have an outer profile, which at least in the end tract proximate to the foot 7, is counter-shaped relative to the frame 3 of the rear wall 2. The foot 7 has a first through hole that is preferably defined in the center thereof, not seen in the figures, which is suitable to house a fixing pin 31, such as a stud being welded to the rear wall 2. This fixing pin 31 being suitable to cooperate with a first nut 8 to fix the foot to the rear wall. The foot 7 partially contacts the rear wall 2 thus defining a fixing seat 9 for the inner element 6.

The angular element 2 further comprises, opposite to the foot 7, a head 10 that is worked as having a first portion 10' and a second portion 10" suitable to be fittingly engaged with portions of the first side wall 11 and second side wall of the cabinet, respectively, such as depicted in Fig. 2 and 3.

The head 10 is further provided with two ribs 13 defining a guide 14 suitable to house the inner element 6. The guide 14 further comprises an opening 15 to allow a second screw 30, schematically illustrated on top of Fig. 3, to pass therethrough, in order to fix the first 11 and second 12 side walls to the angular element 5, which is intended to be screwed within a suitably threaded hole of wall 11.

The angular element 5 is further provided with distributed fixing means, such as indentations 40 suitable to cooperate with the inner element 6.

The inner element 6 is made of electrically conductive material, such as metal, and preferably consists of a bracket structurally associated with the angular element 5 such as to be arranged within the cabinet 1 and extend in a substantially orthogonal direction to the rear wall 2.

The bracket 6 is substantially bent in the shape of a "C", such as to comprise, for example, a main plate-like bar 18 extending between a first end 16 and a second end 17, opposite to the first one, which are suitable to contact the rear wall 2 and, when the assembly of the cabinet has been finished, the side walls 11 and 12, respectively.

The first end 16 of the bracket 6 comprises a first drilled plate 16' extending transversally to the main bar 18. This first plate 16' is suitable to be slidingly coupled with the fixing seat 9 being defined by the foot 7 with the rear wall 2 and is provided with a third hole, not seen in the figures, which can be associated to the first hole being defined in the foot, in which the fixing stud 31 can be inserted.

The second end 17 comprises a second plate 17' provided with a further through hole 19 suitable to house the second screw 30, and is suitable to be slidingly engaged with the guide 14 of the head 10. The further through hole 19 is engaged with the opening 15. The main bar 18 may provide eventually an end tract joined to the first plate and having a profile suitable to substantially follow the frame 3 of the rear wall 2.

With reference to Fig. 2, the first side wall 11 can be fittingly coupled with the first portion 10' of the head 10 of the angular element 5 and is provided with a first laminar projection 20 which partially rests on the guide 14 and having a first notch 22 on a first contact edge. This first laminar projection 20 is shaped as to have the first contact edge inclined by such an angle that the first notch 22 substantially follows a part of the contour of the further through hole 19 of the second plate 17' of the bracket 6.

With reference to Fig. 3, similar to the first side wall 11, the second side wall 12 can be fittingly coupled with the second portion 10" of the head 10 and is provided with a second side projection 21 suitable to be partially rested on the guide 14 and having a second notch 23 on a second contact edge, suitable to be placed beside the first contact edge. This second laminar projection 21 is shaped as to have the second contact edge inclined by an angle complementary to the inclination of the first contact edge and such that the second notch 23 and the first notch 22 define a single opening 24 that can be overlapped to the through hole 19 suitable to house the second screw 30.

The installer, in the assembly step, couples the bracket 6 to the angular element 5 and couples the thus-obtained upright within the fixing pin 31 welded to the rear wall 2 by screwing the first nut 8 to the fixing pin 31 such that the bracket 6 and the rear wall 2 are placed in contact with each other.

The first 11 and second 12 side walls are fittingly coupled with the head 10 of the angular element 5. Subsequently, the screw 30 is inserted within the single opening 24 overlapped to the respective further through hole 19 of the second plate 17 of the bracket 6. The screw 30 is tightened such that both side walls of the cabinet are placed in contact with the bracket 6.

The bracket 6 thus allows the side walls and rear wall of a cabinet to be placed in contact with each other. The bracket has a negligible electrical resistance such that the equipotentiality between the cabinet walls can be obtained by means of the cabinet according to the invention. The operations are repeated with the uprights being provided for the cabinet.

As may be observed, the object of the invention is fully achieved in that all the metallic walls of a cabinet for electrical switchboard can be placed in electrical contact with each other, the electrical switchboard being then capable of being "grounded" with an electrical wire connected, for example, to the rear wall of the cabinet.

A cabinet for electrical switchboard thus provided has the aesthetic advantage that the bracket is placed inside the cabinet, hence it is not visible.

Furthermore, the use of plastic angular elements allows obtaining a lightweight structure, while the brackets provide the cabinet with a greater solidity.

## Claims

1. A cabinet for electrical switchboard (1) comprising:
- a rear wall (2), a bottom wall, a top wall and side walls (11, 12), all made of electrically conductive material;
- four angular elements (5) made of electrically insulating material, each angular element (5) joining the rear wall (2) to one of the said side walls (11, 12) and to the said top or bottom wall;
**characterized in that** it further comprises a bracket (6) made of electrically conductive material which is structurally associated with each angular element (5) and having a first end (16) in contact with the rear wall (2) and a second end (17) in contact with one of said side walls (11, 12) and with the said top or bottom wall.

2. The cabinet for electrical switchboard (1) according to claim 1, wherein the bracket (6) is structurally associated with the angular element (5) such as to be arranged within the cabinet and extend in a direction substantially orthogonal to the rear wall.

3. The cabinet for electrical switchboard (1) according to claim 1, wherein the bracket comprises a substantially plate-like main bar (18) which extends between the first (16) and second (17) ends.

4. The cabinet for electrical switchboard (1) according to claim 3, wherein said first end (16) comprises a first drilled plate extending transversally to the bar.

5. The cabinet for electrical switchboard (1) according to claim 4, wherein the second end (17) of the bracket (6) comprises a second plate being provided with a through hole (19).

6. The cabinet for electrical switchboard (1) according to claim 4, wherein the bar (18) comprises an end tract joined to said first plate and having a profile suitable to substantially follow a frame (3) of the rear wall (2).

7. The cabinet for electrical switchboard (1) according to claim 4, wherein each angular element (5) comprises a foot (7) suitable to partially contact the rear wall (2) and defining therewith a fixing seat (9) for the first plate (16); the cabinet comprising first fixing means (8) of the first plate and foot to the rear wall (2).

8. The cabinet for electrical switchboard (1) according to claim 7, wherein each angular element (5) further comprises a head (10) opposite to the foot (7), which is provided with two ribs (13) defining, respectively, a guide (14) suitable to house the second plate (17), the guide further comprising second fixing means of the second plate (17), the two side walls to the angular element (5).

9. The cabinet for electrical switchboard (1) according to claim 3, wherein the head (10) of the angular element (5) has a first portion (10') and a second portion (10") suitable to be fittingly engaged with first (11) and second (12) side walls of the cabinet, respectively.

10. The cabinet for electrical switchboard (1) according to claim 7, wherein said first fixing means comprise a fixing pin (31) and a first nut (8); the foot (7) of the angular element (5), the first plate (16) being provided with respective through holes for housing the fixing pin (31) of the foot to the rear wall.

11. The cabinet for electrical switchboard (1) according to claim 8, wherein the second fixing means include at least one second fixing screw (30) and wherein the first side wall (11) and the second side wall (12) comprise first (20) and second (21) side projections, respectively, which rest on the guide; the guide, the second drilled plate, the first and second projections being provided with respective openings (15, 19, 22, 23) to house the fixing screw.

12. The cabinet for electrical switchboard (1) according to claim 11, wherein the openings of the first and second projections are notches formed on respective contact edges and wherein said projections are placed side by side such that the corresponding notches (22, 23) define a single opening (24).

13. The cabinet for electrical switchboard (1) according to claim 3, wherein the angular element (5) is provided with distributed fixing means suitable to cooperate with the main bar (18).

14. The cabinet for electrical switchboard (1) according to claim 1, wherein the rear wall (2), the side walls (11, 12) and the bracket (6) are made of metal and the angular element (5) is made of plastic.

15. The cabinet for electrical switchboard (1) according to claim 1, wherein the rear wall (2), the side walls (11, 12) and the bracket (6) are made of metal and the angular element (5) is made of plastic; the bracket making the rear wall and side wall substantially equipotential and giving solidity to the angular element.

## Patentansprüche

1. Elektrischer Schaltschrank (1), umfassend:
- eine hintere Wand (2), eine Bodenwand, eine obere Wand und Seitenwände (11, 12), welche alle aus einem elektrisch leitfähigen Material hergestellt sind;
- vier winkelförmige Elemente (5), welche aus einem elektrisch isolierenden Material hergestellt sind, wobei jedes winkelförmige Element (5) die hintere Wand (2) mit einer von den Seitenwänden (11, 12) und der oberen Wand oder der Bodenwand verbindet;
**dadurch gekennzeichnet, dass** er ferner einen aus einem elektrisch leitfähigen Material hergestellten Bügel (6) umfasst, welcher strukturell jedem der winkelförmigen Elemente (5) zugeordnet ist und ein erstes mit der hinteren Wand (2) in Kontakt stehendes Ende (16) und ein zweites mit einer von den Seitenwänden (11, 12) und mit der oberen Wand oder der Bodenwand in Kontakt stehendes zweites Ende (17) aufweist.

2. Elektrischer Schaltschrank (1) nach Anspruch 1,
wobei der Bügel (6) strukturell dem winkelförmigen Element (5) derart zugeordnet ist, dass er innerhalb des Schranks angeordnet ist und sich in einer zu der hinteren Wand im Wesentlichen orthogonalen Richtung erstreckt.

3. Elektrischer Schaltschrank (1) nach Anspruch 1,
wobei der Bügel eine im Wesentlichen plattenähnliche Hauptleiste (18) umfasst, welche sich zwischen dem ersten (16) und dem zweiten (17) Ende erstreckt.

4. Elektrischer Schaltschrank (1) nach Anspruch 3,
wobei das erste Ende (16) eine sich transversal zu der Leiste erstreckende erste gebohrte Platte umfasst.

5. Elektrischer Schaltschrank (1) nach Anspruch 4,
wobei das zweite Ende (17) des Bügels (6) eine mit einem Durchgangsloch (19) bereitgestellte zweite Platte umfasst.

6. Elektrischer Schaltschrank (1) nach Anspruch 4,
wobei die Leiste (18) einen Endteil umfasst, welcher mit der ersten Platte verbunden ist und ein Profil aufweist, welches geeignet ist, einem Rahmen (3) der hinteren Wand (2) im Wesentlichen zu folgen.

7. Elektrischer Schaltschrank (1) nach Anspruch 4,
wobei jedes winkelförmige Element (5) einen Fuß (7) umfasst, welcher geeignet ist, teilweise mit der hinteren Wand (2) in Kontakt zu stehen und damit einen Befestigungssitz (9) für die erste Platte (16) zu definieren; wobei der Schrank ferner erste Befestigungsmittel (8) zum Befestigen der ersten Platte und des Fußes an die hintere Wand (2) umfasst.

8. Elektrischer Schaltschrank (1) nach Anspruch 7,
wobei jedes winkelförmige Element (5) ferner einen dem Fuß (7) entgegengesetzten Kopf (10) umfasst, welcher mit zwei Rippen (13) bereitgestellt ist, welche jeweils eine Führung (14) definieren, welche geeignet ist, die zweite Platte (17) aufzunehmen, wobei die Führung ferner zweite Befestigungsmittel zum Befestigen der zweiten Platte (17) und der beiden Seitenwände an das winkelförmige Element (5) umfasst.

9. Elektrischer Schaltschrank (1) nach Anspruch 3,
wobei der Kopf (10) des winkelförmigen Elements (5) einen ersten Abschnitt (10') und einen zweiten Abschnitt (10") aufweist, welche geeignet sind, passend mit der ersten (11) bzw. zweiten (12) Seitenwand des Schranks in Eingriff zu treten.

10. Elektrischer Schaltschrank (1) nach Anspruch 7,
wobei die ersten Befestigungsmittel einen Befestigungsstift (31) und eine erste Mutter (8) umfassen; wobei der Fuß (7) des winkelförmigen Elements (5) und die erste Platte (16) mit jeweiligen Durchgangslöchern bereitgestellt sind, um den Befestigungsstift (31) des Fußes an der hinteren Wand aufzunehmen.

11. Elektrischer Schaltschrank (1) nach Anspruch 8,
wobei die zweiten Befestigungsmittel wenigstens eine zweite Befestigungsschraube (30) umfassen und wobei die erste Seitenwand (11) und die zweite Seitenwand (12) einen ersten (20) bzw. einen zweiten (21) Seitenvorsprung umfassen, welche auf der Führung aufliegen; wobei die Führung, die zweite gebohrte Platte, der erste und der zweite Vorsprung mit jeweiligen Öffnungen (15, 19, 22, 23) bereitgestellt sind, um die Befestigungsschraube aufzunehmen.

12. Elektrischer Schaltschrank (1) nach Anspruch 11,
wobei die Öffnungen des ersten und des zweiten Vorsprungs Einkerbungen sind, welche an jeweiligen Kontakträndern gebildet sind, und wobei die Vorsprünge derart Seite an Seite angeordnet sind, dass die entsprechenden Einkerbungen (22, 23) eine einzige Öffnung (24) definieren.

13. Elektrischer Schaltschrank (1) nach Anspruch 3,
wobei das winkelförmige Element (5) mit verteilten Befestigungsmitteln bereitgestellt ist, welche geeignet sind, mit der Hauptleiste (18) zusammen zu wirken.

14. Elektrischer Schaltschrank (1) nach Anspruch 1,
wobei die hintere Wand (2), die Seitenwände (11, 12) und der Bügel (6) aus Metall hergestellt sind und wobei das winkelförmige Element (5) aus Kunststoff hergestellt ist.

15. Elektrischer Schaltschrank (1) nach Anspruch 1,
wobei die hintere Wand (2) die Seitenwände (11, 12) und der Bügel (6) aus Metall hergestellt sind und wobei das winkelförmige Element (5) aus Kunststoff hergestellt ist; wobei der Bügel im Wesentlichen einen Potenzialausgleich zwischen der hinteren Wand und der Seitenwand herstellt und dem winkelförmigen Element Festigkeit verleiht.

## Revendications

1. Armoire pour tableau électrique (1), comprenant:
une paroi arrière (2), une paroi inférieure, une paroi supérieure et des parois latérales (11, 12), toutes réalisées à partir d'un matériau électriquement conducteur;
quatre éléments angulaires (5) réalisés avec un matériau électrique isolant, chaque élément angulaire (5) assemblant la paroi arrière (2) à l'une desdites parois latérales (11, 12) et à ladite paroi supérieure ou inférieure;
**caractérisée en ce qu'**elle comprend en outre un support (6) réalisé avec un matériau électriquement conducteur qui est structurellement associé avec chaque élément angulaire (5) et ayant une première extrémité (16) en contact avec la paroi arrière (2) et une seconde extrémité (17) en contact avec l'une desdites parois latérales (11, 12) et avec ladite paroi supérieure ou inférieure.

2. Armoire pour tableau électrique (1) selon la revendication 1, dans laquelle le support (6) est structurellement associé à l'élément angulaire (5) afin d'être agencés à l'intérieur de l'armoire et s'étendre dans une direction sensiblement orthogonale par rapport à la paroi arrière.

3. Armoire pour tableau électrique (1) selon la revendication 1, dans laquelle le support comprend une barre principale sensiblement en forme de plaque (18) qui s'étend entre les première (16) et seconde (17) extrémités.

4. Armoire pour tableau électrique (1) selon la revendication 3, dans laquelle ladite première extrémité (16) comprend une première plaque percée s'étendant transversalement jusqu'à la barre.

5. Armoire pour tableau électrique (1) selon la revendication 4, dans laquelle la seconde extrémité (17) du support (6) comprend une seconde plaque qui est prévue avec un trou de passage (19).

6. Armoire pour tableau électrique (1) selon la revendication 4, dans laquelle la barre (18) comprend une section d'extrémité assemblée à ladite première plaque et ayant un profil approprié pour suivre sensiblement un cadre (3) de la paroi arrière (2).

7. Armoire pour tableau électrique (1) selon la revendication 4, dans laquelle chaque élément angulaire (5) comprend un pied (7) approprié pour être partiellement en contact avec la paroi arrière (2) et définissant avec cette dernière un siège de fixation (9) pour la première plaque (16); l'armoire comprenant des premiers moyens de fixation (8) de la première plaque et du pied à la paroi arrière (2).

8. Armoire pour tableau électrique (1) selon la revendication 7, dans laquelle chaque élément angulaire (5) comprend en outre une tête (10) opposée au pied (7), dotée de deux nervures (13) définissant respectivement, un guide (14) approprié pour loger la seconde plaque (17), le guide comprenant en outre des seconds moyens de fixation de la seconde plaque (17), des deux parois latérales à l'élément angulaire (5).

9. Armoire pour tableau électrique (1) selon la revendication 3, dans laquelle la tête (10) de l'élément angulaire (5) a une première partie (10') et une seconde partie (10") appropriées pour être mises en prise respectivement par ajustement avec les première (11) et seconde (12) parois latérales de l'armoire.

10. Armoire pour tableau électrique (1) selon la revendication 7, dans laquelle lesdits premiers moyens de fixation comprennent une broche de fixation (31) et un premier écrou (8); le pied (7) de l'élément angulaire (5), la première plaque (16) étant dotés de trous de passage respectifs pour loger la broche de fixation (31) du pied sur la paroi arrière.

11. Armoire pour tableau électrique (1) selon la revendication 8, dans laquelle les seconds moyens de fixation comprennent au moins une seconde vis de fixation (30) et dans laquelle la première paroi latérale (11) et la seconde paroi latérale (12) comprennent respectivement des première (20) et seconde (21) saillies latérales, qui reposent sur le guide; le guide, la seconde plaque percée, les première et seconde saillies étant dotés d'ouvertures (15, 19, 22, 23) respectives pour loger la vis de fixation.

12. Armoire pour tableau électrique (1) selon la revendication 11, dans laquelle les ouvertures des première et seconde saillies sont des encoches formées sur des bords de contact respectifs et dans laquelle lesdites saillies sont placées côte à côte de sorte que les encoches (22, 23) correspondantes définissent une seule ouverture (24).

13. Armoire pour tableau électrique (1) selon la revendication 3, dans laquelle l'élément angulaire (5) est prévu avec des moyens de fixation répartis appropriés pour coopérer avec la barre principale (18).

14. Armoire pour tableau électrique (1) selon la revendication 1, dans laquelle la paroi arrière (2), les parois latérales (11, 12) et le support (6) sont réalisés à partir de métal et l'élément angulaire (5) est réalisé à partir de plastique.

15. Armoire pour tableau électrique (1) selon la revendication 1, dans laquelle la paroi arrière (2), les parois latérales (11, 12) et le support (6) sont réalisés à partir de métal et l'élément angulaire (5) est réalisé à partir de plastique; le support rendant la paroi arrière et la paroi latérale sensiblement équipotentiels et communiquant la solidité à l'élément angulaire.
